(19) Europäisches Patentamt
European Patent Office
Office européen des brevets

(11) **EP 3 670 398 B1**

(12) **EUROPEAN PATENT SPECIFICATION**

(45) Date of publication and mention
of the grant of the patent:
**25.08.2021  Bulletin 2021/34**

(51) Int Cl.:
***B65G 23/26*** *(2006.01)*     ***B65G 13/073*** *(2006.01)*
***B65G 13/075*** *(2006.01)*     ***F16D 57/02*** *(2006.01)*

(21) Application number: **18290146.2**

(22) Date of filing: **20.12.2018**

(54) **BRAKING DEVICE FOR A CONVEYOR ROLLER AND METHOD FOR BRAKING A CONVEYOR ROLLER**

BREMSVORRICHTUNG ZUM BREMSEN EINER FÖRDERROLLE UND VERFAHREN ZUM BREMSEN EINER FÖRDERROLLE

DISPOSITIF ET PROCÉDÉ DE FREINAGE DE ROULEAU DE CONVOYAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.06.2020  Bulletin 2020/26**

(73) Proprietor: **Interroll Holding AG**
**6592 Sant' Antonino (CH)**

(72) Inventors:
• **Frangeul, Xavier**
**85000 La Roche-Sur-Yon (FR)**
• **Loizeau, Antoine**
**85110 Saint Germain de Princay (FR)**

(74) Representative: **Kohlhof, Stephan**
**Interroll Innovation GmbH**
**Opelstr. 1**
**41836 Hückelhoven (DE)**

(56) References cited:
**EP-B1- 2 419 353     DE-U1- 20 212 979**
**US-A- 3 158 231**

## Description

The invention concerns a braking device for a conveyor roller, a conveyor roller for a roller conveyor as well as a method for braking a conveyor roller.

So-called flow racks or flow storage systems are known from storage. These concern racks that may be loaded from a first rack side with containers and/or pallets, while from another second rack side the stored containers or pallets may be extracted. Therefore, it is necessary at first to convey the pallets after storing from the first to the second rack side. Usually, for this purpose the racks are provided with roller conveyors on which the pallets may roll across a designated route. Thereby, the pallets may be driven by force of gravity. For this purpose, it is known to tilt the roller conveyor at an angle of at least 2.3°. These so-called gravity roller conveyors often work according to the FIFO or LIFO principle (First-in, First-out or Last-in, First-out). The roller conveyors are, in other words, loaded with pallets at the first rack side that is higher up and are conveyed therefrom, driven by gravity, to the lower second rack side where they are finally unloaded.

Such a roller conveyor may provide room for a plurality of pallets that accumulate at the lower side due to force of gravity. Usually, separators are built in that are accumulating subsequent pallets and keep them spaced from the first pallet so that the first pallet at the extracting side, meaning at the second rack side, may be extracted without dynamic pressure. After the extraction of the first pallet the second pallet is released by these separators to be further conveyed. That means by extracting one pallet all pallets are rolling one position ahead along the roller conveyor.

However, often these pallets have different surface properties for example due to a foil cover or damage, especially to the pallet base, whereby the pallets move with different easiness across the roller conveyor. Therefore, close attention must be paid so that the pallets always start moving in order to avoid clogging of the roller conveyor of the flow rack.

In order to ensure an interference-free function of the roller conveyor and therefore of the flow rack an increased inclination of up to 4° may be provided and/or at least a part of the conveyor rollers may be provided with active drives.

However, such a steeper inclination provides the danger that individual pallets accelerate such that they may overcome or destroy the provided end stopping devices due to their mass and high speed. Such uncontrolled and unbraked pallets may then lead to material damage or even personal injury.

In order to avoid this, it is known to build in a so-called brake roller as speed regulator in the roller conveyor. EP 1 243 528 A1 or EP 2 419 353 B1 thus disclose a magnetic brake roller. DE 202 12 979 U1 discloses a brake roller with a brake rotor braking a roller body using brake shoes. EP 2 419 353 B1 discloses a braking device for a conveyor roller according to the preamble of claim 1 and a method for braking a conveyor roller.

However, the solutions known so far provide clear disadvantages. For example, the above-mentioned actively driven conveyor rollers destroy the price advantage of flow racks driven by gravitation without drive and sensors and are thus hardly competitive. The known brake rollers have the disadvantage that they are expensive compared to regular, that is unbraked, conveyor rollers which is why a maximum of one brake roller per pallet space is built in.

If a pallet travels through an empty roller conveyor of a flow rack it is accelerated after each brake roller and braked again by the next brake roller. When used by high pallet intake or extraction, each brake roller has to brake a high speed, a brake roller with brake shoes wears out quickly, and a magnetic brake roller may overheat. Furthermore, the brake rollers are built in at a slightly higher position than the carrying roller in order to be securely engaged by the pallet. When hit by a pallet they are lifted and produce sounds.

It is thus the problem of the present invention to provide an improved speed regulation for gravitation-driven flow racks. In particular, it may be the problem to enable less expensive and/or more quiet and/or more long-lasting speed regulation.

According to one aspect of the invention a braking device for a conveyor roller is provided, comprising: a rotating element that is couplable to the conveyor roller such that upon rotation of the conveyor roller the rotating element rotates with the conveyor roller, a transmission driving a shaft element by a rotation of the rotating element and at least one impeller wheel coupled to the shaft element. The impeller wheel comprises a plurality of rotor blades. The impeller wheel in a driven state performs air compression work with the rotor blades and thereby provides a braking effect.

Advantageously, by means of the above-described braking device an efficient braking device is provided making it possible at low cost to form a conveyor roller with braking effect. Therefore, it may be economical to provide a plurality of conveyor rollers, especially all conveyor rollers, with such a braking device for a roller conveyor of a flow storage, whereby a pallet may be continuously braked after it started moving again so that a consistent conveyor speed is reached. Thereby, the consistent conveyor speed of each pallet may be limited to a maximum of about 0.25 m/s or about 0.9 km/h by using the braking device.

The conveyor roller may be formed as a hollow-cylindrical shape, having two front sides at which roller floors of the conveyor roller may be adapted and a roller shell. The conveyor roller may be mounted in the area of its front sides rotatable on a rack or frame of a roller conveyor and/or a flow storage so that at least the roller shell of the conveyor roller is rotatable as soon as a pallet crosses the roller conveyor or the flow storage. The conveyor roller may comprise, by way of example, an inner diameter of about 60 mm or about 80 mm.

The braking device is adapted to be coupled to such a conveyor roller, especially to be included and/or inserted in such a conveyor roller.

The braking device comprises a rotating element for coupling the braking device to the conveyor roller. The rotating element may be formed as a substantially hollow-cylindrical housing or a sleeve, at least sectionally, having two front sides and a shell surface. The shell surface may be formed continuously or may be provided with a plurality of recesses so that the rotating element comprises a nearly grid-like structure. Thereby the rotating element may have a reduced weight. The rotating element may be formed of a suitable plastic or a suitable metal alloy. Other suitable materials may be used as well. The term "suitable" in this respect may especially refer to a light and/or low-wear and/or resistant and/or dynamically stable and/or thermally resistant and/or cost-effective material.

The rotating element may be coupled by means of the shell surface to an inner wall of the roller shell of the conveyor roller such that the rotating element rotates upon rotation of the conveyor roller, especially of the roller shell of the conveyor roller, with the conveyor roller. The coupling may be performed using a force-fitting connection, for example by pressing the braking device into the roller shell and/or by means of a material-fitting connection, as for example gluing or welding the braking device in the roller shell. A form-fitting connection between rotating element and conveyor roller may also be used. For example, the rotating element may be formed with a terminal stop, for example a stop ring, so that the braking device after being included in the roller shell of the conveyor roller is in contact with the stop of the rotating element at a front side of the conveyor roller or the roller shell so that the rotating element may be form-fittingly clamped between the frame of a roller conveyor and the conveyor roller. Other connection variants may be used as well. The formed coupling of the braking device to the conveyor roller may be formed as a releasable, conditionally releasable and irreversible connection.

An outer dimension of the rotating element may correlate such with the inner diameter of the accompanying conveyor roller and/or the roller shell that the rotating element is couplable to the conveyor roller. Consequently, a pallet driven by gravitation may transmit a kinetic energy or a rotation to the rotating element by means of the roller shell of the conveyor roller when it is conveyed through a roller conveyor, comprising a conveyor roller with a braking device coupled thereto.

The rotating element may encompass the other components of the braking device such that these are arranged located radially inside in the rotating element and/or inside the shell surface of the rotating element. These components include in particular a transmission, a shaft element and an impeller wheel comprising a plurality of rotor blades.

The transmission may be coupled to the rotating element on the one hand and the shaft element on the other. In other words, the transmission may be adapted such that a rotation of the rotating element by means of the transmission is transmitted onto the shaft element. Thereby, the transmission ratio of the pairing of rotating element - transmission - shaft element, especially the transmission ratio z for a gear transmission, a synchronous belt transmission or a chain drive may be chosen such that the rotating element on the input side performs fewer revolutions per minute (Rpm) than the shaft element on the output side. However, the transmission is not limited to gear transmissions, synchronous belt transmissions or chain drives as mentioned above by way of example. For example, the transmission ratio z may be between about 10 and about 200. Preferably, the transmission ratio z may be between about 40 and about 150. Particularly preferably the transmission ratio z may be between about 80 and about 100. The transmission ratio z may correspond to the quotient of *(number of teeth of the output gear wheel)/(number of teeth of the input gear wheel)* as long as a gear transmission, a synchronous belt drive or chain drive is provided. The transmission ratio for other transmission types is calculated according to the relevant formulas. By way of example, the transmission may transmit a revolution on the input side of the rotating element of about 80 Rpm onto a revolution on the output side of the shaft element of about 7200 Rpm.

The transmission in particular may be adapted as a planetary transmission and/or epicyclic transmission, wherein the planetary gear, particularly the carrier, may be connected to a mounting structure. The ring gear may be connected to or is part of the rotating element. The sun gear may be connected to the shaft element. The transmission may be executed in several stages. That means that several planetary transmissions, by way of example two or three planetary transmissions, may be connected in series. One common ring gear may be provided for all planetary gear stages. Thus, a higher transmission ratio may be reachable. The transmission may be adapted such that the shaft element rotates opposed to the rotating element and/or the conveyor roller, wherein a relative speed between the shaft element and the rotating element is increased.

The impeller wheel is coupled to the shaft element so that upon rotation of the shaft element the impeller wheel rotates with the shaft element. Thereby, the coupling may be established by means of a form-fitting, a materially bonding and/or a force-fitting connection. The connection may be formed as a releasable, a conditionally releasable or as a permanent connection. In particular the coupling of the impeller wheel to the shaft element may be established by means of one or several pins. The pins may extend, starting from the shaft element, in an axial direction. The axial direction may proceed parallel to the axis of the conveyor roller and/or the shaft axis of the shaft element. The impeller wheel may comprise complementary recesses for inserting the pins so that after connecting shaft element and impeller wheel the impeller wheel rotates upon rotation of the shaft element. Thereby, the pins may be located away from a rotating axis of the shaft element so that upon rotation of the shaft element the pins are rotating on a circular path around the shaft element with the shaft element. Alternatively, the pins may also be provided at the impeller wheel. Alternatively, the pins may also extend in a radial direction.

The transmission and the shaft element may be provided on a stationary shaft, especially a shaft that does not rotate. This shaft may extend from one front side to the other front side of the braking device. The shaft may form the geometrical axis of the braking device around which the conveyor roller, the rotating element, the shaft element and the impeller wheel rotate. In particular, the rotating axis of the conveyor roller may correspond to the rotating axes of the rotating element, the shaft element and/or the impeller wheel.

The impeller wheel comprises a plurality of rotor blades, wherein the rotor blades may be arranged at an axis element of the rotor blade arranged radially inside. Each rotor blade may, starting from a base portion of the rotor blade arranged radially inside at the axis element extend radially outside, wherein the outer area of each rotor blade may be described as their head portion. The cross-sectional profile of each rotor blade may be approximately similar to the cross-sectional profile of an aircraft wing. This cross-sectional profile may change between the base portion and the head portion of the rotor blade. Especially the cross-sectional profile along the radial extension of each rotor blade may be optimized to the extent that that the rotor blade is able to perform air compression work effectively, whereby an optimal braking effect may be provided. The rotor blades may be formed such that a majority of the air compression work is performed in a radially outer area which, for example, is adjacent to the roller shell of the conveyor roller and/or a cylindrical housing element of the rotating element attached thereto.

The air compression work of the braking device may be performed similar to the principle of a turbocompressor. That means that the braking performance of the braking device results from the torque acting on the rotor blades when compressing an air current according to the principles of Euler's Turbine Equation. The basis of Euler's Turbine Equation may be found in maintaining the angular momentum of a mass current in a closed system:

Changing the angular momentum within a sub-system (turbine blades or presently the rotor blades) generates a torque around the rotating axis of the turbine (presently the braking device).

A braking effect may also be caused by opposingly blowing onto wind catchers, as for example guide wheels, coupled to the roller shell.

Generally, the braking effect may result from the law of conservation of energy, wherein the driving energy (transmitted by the pallet through gravitation) is decreased in the amount of energy necessary for air compression. Thereby the rotation of the conveyor roller is braked.

In one embodiment the transmission is adapted such that the shaft element and therefore the impeller wheel is driven at at least eight times the rotating speed of a roller shell of the conveyor roller.

Thereby an effective transmission and acceleration of the impeller wheel is enabled. That way, by means of an increased rotating speed increased air compression work may be performed at the impeller wheel, wherein an increased braking effect may be provided. In particular, by choosing the transmission ratio the desired braking effect may be exactly dimensioned.

The impeller wheel may, as was explained already above, be driven at an increased rotating speed of the conveyor roller. Thereby it may preferable by way of example to drive the impeller wheel at about 40 times or even about 80 times the speed of the rotating speed. It may be particularly preferred to drive the impeller wheel at about 90 times the rotating speed. Especially by means of the rotating speed of the impeller wheel a desired air mass current may be adjusted by the braking device.

The impeller wheel may be preferably configured such that it sucks in air during operation through an air inlet of the braking device which it compresses using its rotor blades.

In an embodiment it is thus possible by means of the rotor blades of the impeller wheel not only to perform air compression work but also to generate the air mass current using the braking device by suction. Thus, no separate component for generating the air mass current is to be provided. Thereby it is possible to produce the braking device small, light and cost-effective.

Furthermore, the braking device comprising the impeller wheel configured such may be adapted such that with an increased rotating speed of the roller shell or the conveyor roller the braking effect increases with the rotating speed since the impeller wheel conveys an increased air mass current at an increased rotating speed. Consequently, more air compression work is performed whereby an increased braking effect is provided.

In an embodiment the braking device comprises a plurality of rotor blades adapted for directing an air current onto a plurality of rotor blades.

Thus, the air mass current conveyed by the rotor blades may be directed such at the rotor blades by means of the guide blades that an optimal efficiency of the air compression is reached. Further, the braking device may be adapted such that the guide blades are also contributing to increasing the static pressure of the air current. Thereby the whole efficiency of the braking device is increased with regard to the air compression work and thus also with regard to the braking effect.

The guide blades may be arranged at the rotating element and extend therefrom radially inwards. Alternatively or additionally the guide blades may be arranged at a guide wheel.

In one embodiment the guide blades are arranged at at least one guide wheel which is arranged adjacent to the at least one impeller wheel in the braking device.

Thus, the air mass current directed by the guide blades is substantially directed directly at the rotor blades. Therefore, the formation of an eddy current that would decrease the efficiency may be avoided. The guide blades may be securely attached to the housing and/or the rotating element of the braking device. Furthermore, the guide blades may be arranged at an axis element of the guide wheel. The guide wheel and the guide blades may be adapted such that they do not comprise a relative speed to the rotating element but rotate with it. The guide blades may direct the air mass current at the rotor blades at an optimal angle, wherein the coupling of the mechanically exploitable performance between braking device and fluid may take place via the rotor blades. The combination of a set of rotor blades and a set of guide wheels guiding the air mass current to the rotor blades may be described as stage. The entirety of all blades of the braking device, meaning the rotor blades and the guide blades may be described as the blade arrangement of the braking device.

In one embodiment in air current direction before and after each rotor blade of the braking device a guide wheel comprising at least a plurality of guide blades is arranged.

Thereby the wording "before and after each rotor blade" may be understood as directly adjacent to a rotor blade, namely before and after, respectively.

In one embodiment, each guide wheel is either arranged statically secured inside the conveyor roller or such that it rotates with the rotating element and thus with the conveyor roller.

The guide wheel and thus the guide blades therefore either may not comprise a relative speed to the rotating element and/or to the roller shell of the conveyor roller or, however, no relative speed to an unmoved frame of an accompanying roller conveyor to which the conveyor roller is attached.

In one embodiment each guide blade comprises a head and a base portion and is connected to the rotating element at the head portion arranged radially outside.

Thus, it may be ensured that the guide blade rotates exactly with the speed of the rotating element.

In one embodiment each guide blade comprises a head and a base portion and is arranged at a base portion arranged radially inward at an axis element of the impeller wheel.

The axis element may be understood as impeller wheel without rotor blades. Thus, by means of the axis element, not only a connection to the rotor blades may be established but at the same time a connection area for connecting the impeller wheel with the shaft element may be provided. The axis element may comprise one or several recesses for inserting connecting pins. Alternatively, pins may be arranged at the axis element which are provided to be inserted in the complementary recesses at the shaft element. The axis element may further comprise beads and/or other reinforcing elements which increase the stiffness of the impeller wheel and/or prevent the impeller wheel from getting twisted during operation in the braking device. This may increase the efficiency of the air compression work and thus the braking effect.

The rotor blades may comprise a different cross-sectional profile in der their head portions than in their base portions. A change of the cross-sectional profile may be adapted such that an air mass current flowing at the rotor blades in the area located radially inward (in the base portion) may engage with the rotor blades in a manner as low in resistance as possible and may be accelerated therefrom radially outward so that the air current in the head portion of the rotor blade is compressed using the maximum torque.

In one embodiment the rotating element is coupled to the transmission.

Thus, the rotating element may transmit a rotation of the transmission directly and therefore low in loss to the transmission. Thereby high speed may be achievable at the impeller wheel.

In one embodiment the rotating element is provided as a housing of the braking device which is attachable in a roller shell of the conveyor roller.

Therefore, the braking device may be constructed lightly since advantageously no separate encapsulation needs to be provided. The further components of the braking device as for example the shaft element and/or the impeller wheel may be arranged in this housing.

In one embodiment the transmission comprises at least a planetary transmission.

Thus, the planetary transmission comprises a compact construction so that the braking device may be formed overall small and is thus easily introducible in a roller shell of a conveyor roller. Since the planetary transmission may in addition distribute the torque of the rotating element on several gear wheels (planets) it is suitable for transmitting high torques and is thus extremely long-lasting. Due to this suitability for transmission of high torques the planetary transmission may also be formed with several stages. It may be preferable to provide a three-stage planetary transmission. Thereby, about 90 to about 100 times the rotating speed of the rotating element at the impeller wheel may be achieved, by way of example. Another advantage may be the quiet run level of the planetary transmission.

In one embodiment, the braking device comprises two impeller wheels and three guide wheels which are arranged in air current direction alternatingly in succession.

Therefore, by means of such an embodiment, the braking device may be formed comprising two compression stages. Thus, an air mass current may be already directed upon inflowing in the braking device by means of a first guide wheel, whereby already at the first impeller wheel a directed current is present at the impeller wheel. Thereby already the first compression stage with a high degree of efficiency may be performed. After directing the compressed air current by means of the second guide wheel onto the second impeller wheel, the second air compression with a high degree of efficiency may be performed. At the third guide wheel the twice compressed air current may be directed a last time, wherein the third guide wheel may convert a kinetic energy (angular momentum) present in the air current into static energy. The air current direction may substantially extend from one inlet side of the braking device to an outlet side of the braking device.

According to one further aspect, a conveyor roller for a roller conveyer, comprising a braking device according to the above-described aspect is provided, wherein the braking device is arranged within a roller shell of the conveyor roller.

The braking device introduced in the conveyor roller may be drivable solely by means of rotation of a roller shell of the conveyor roller. The conveyor roller and/or the braking device do not need a separate energy supply for braking pallets driven by gravity, running across the conveyor roller.

In addition, the braking device may be arranged at an area of a (e.g. first) front side of the conveyor roller by means of which the conveyor roller is attached to a frame and/or rack of the roller conveyor. One or more pressure optimizing device(s) may be introduced at the opposing (e.g. second) front side of the conveyor roller into the conveyor roller and/or arranged at an exhaust of the breaking device. The pressure optimizing device(s) may be especially designed to optimize and/or reduce pressure loss at the exhaust of the braking device and/or at the entrance of an end roller cap of the brake roller.

According to another aspect a method for braking a conveyor roller is provided, comprising the steps of: Introducing a braking device according to the afore-described aspect in a conveyor roller; coupling the rotating element of the braking device to the conveyor roller; rotating the rotating element by means of a rotation of the conveyor roller; transmitting the rotation of the rotating element to the shaft element of the braking device by means of the transmission of the braking device; driving the impeller wheel of the braking device by means of the shaft element; and performing air compression work by the rotor blades of the impeller wheel to brake the conveyor roller.

Another step of the method may be to introduce on the front side of the conveyor roller opposing the braking device a pressure optimizing device in the conveyor roller. Thereby, pressure loss at the exhaust of the braking device and/or at the entrance of the end roller cap may be efficiently reduced.

Hereinafter an embodiment of the invention is further described based on the accompanying figures. It is understood that the present invention is not limited to this embodiment and that individual features of the embodiment may be combined within the scope of the accompanying claims into further embodiments. What is shown is:

> **Fig. 1** a longitudinal section through a conveyor roller, clamped in the frame of a roller conveyor;
> **Fig. 2** a perspective view of a braking device;
> **Fig. 3** a perspective view of a braking device, comprising a transparently shown rotating element;
> **Fig. 4a** a perspective sectional view of a braking device;
> **Fig. 4b** a longitudinal section through a braking device;
> **Fig. 5** a flow pattern of an air mass current flowing through a braking device;
> **Fig. 6** a section through respectively one blade of the blade arrangement of the braking device in a schematic representation;
> **Fig. 7** an axial cross-sectional view of the current path in the braking device in a schematic representation; and
> **Fig. 8** a longitudinal section through an end roller cap comprising a pressure optimizing device.

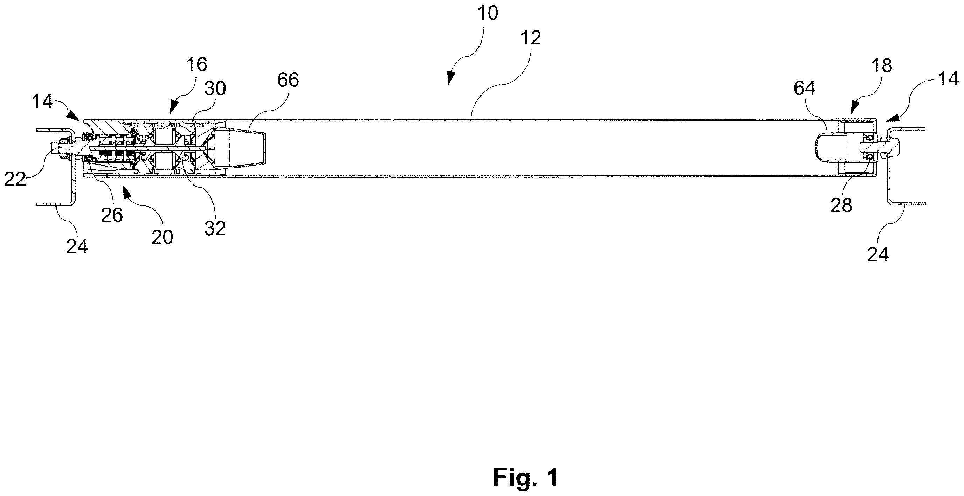

The conveyor roller 10, as shown in **Fig. 1,** comprising a roller shell 12 and two front sides 14, comprises a braking device 16, introduced at one of the front sides 14 into the roller shell 12. At the opposing front side 14, an end roller cap 18 is arranged in the roller shell 12 that is especially designed to optimize and/or reduce pressure loss at its entrance by a pressure optimizing device 64. At the exhaust of the braking device 16, another pressure optimizing device 66 may be arranged. The braking device 16 comprises a transmission 20 which may be presently adapted as planetary transmission. The planetary transmission in particular may be adapted with three stages, wherein a higher transmission is possible. The roller shell 12 of the conveyor roller 10 is adapted to rotated around itself as soon as it is crossed by a pallet (not shown).

The conveyor roller 10 may be a part of the roller conveyor along which for example pallets and/or other items may be transported into one conveying direction. The conveying direction is thereby directed approximately perpendicular to the drawing plane of Fig. 1.

The transmission 20 may be further adapted such that an area of the transmission 20 at the same time serves as a mounting structure 22, e.g. the carrier. The mounting structure 22 may be adapted for mounting and/or connecting the conveyor roller 10 in or with a rack 24 and/or a frame of a roller conveyor (not shown) in a motionless way. The mounting structure 22 may be arranged in a bearing 26, for example a ball bearing, of the braking device 16, so that the mounting structure 22 may be stationary, while other elements of the braking device 16 may be rotatable. The braking device 16 may form the roller floor of the conveyor roller 10 at the front side 14. Alternatively, the braking device 16 may be connectable and/or couplable to a roller floor, outwardly limiting the conveyor roller 10. The bearing 26 may be alternatively adapted in this roller floor.

The end roller cap 18 may also comprise a bearing 28 by means of which the front side 14 of the conveyor roller 10 opposing the braking device 16 at the rack 24 may be arranged by means of a pin and/or a shaft and/or another suitable component. The end roller cap 18 may comprise a bearing to support the rotation of the conveyor shell 12.

The braking device 16 comprises a rotating element 30 coupled to the roller shell 12 of the conveyor roller 10 and upon rotation of the conveyor roller 10 and/or the roller shell 12 drives the transmission 20 such that the transmission 20 transmits the rotation of the conveyor roller 10 and/or of the roller shell 12 in a rotation of a shaft element 32. The shaft element 32 may be driven due to a transmission of the transmission 20 to a clearly higher number of rotations than the roller shell 12, when the roller shell 12 is rotated. The roller shell 12 may, for example, be rotated by one or several pallets. In order to enable a high number of rotations at the shaft element 32, the transmission 20 may be adapted as transmission having several stages, for example as a three-stage transmission.

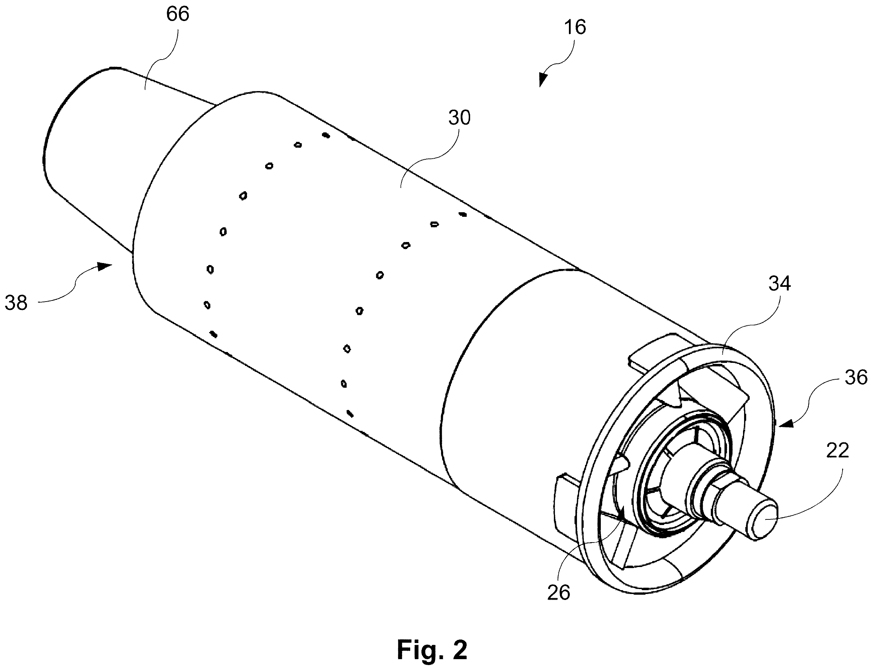

Fig. 2 shows a braking device 16 comprising the rotating element 30. The rotating element 30 may be adapted as hollow-cylindrical housing. At the rotating element 30, at the end, a stop ring 34 may be arranged. The stop ring 34 may be provided for forming a form fitting with the front side 14 of the conveyor shell 12.

By means of the outer shell surface of the rotating element 30 the rotating element 30 may be coupled to an inner wall of the roller shell 12 of the conveyor roller 10 so that the rotating element 30 rotates upon a rotation of the conveyor roller 10, especially of the roller shell 12 of the conveyor roller 10 and/or the roller shell 12 with it and thereby drives the transmission 20.

The braking device 16 further comprises an inlet site 36 and an outlet side 38, which may be flown through by respectively one air current. At these sides 36 and 38 the housing comprises air openings.

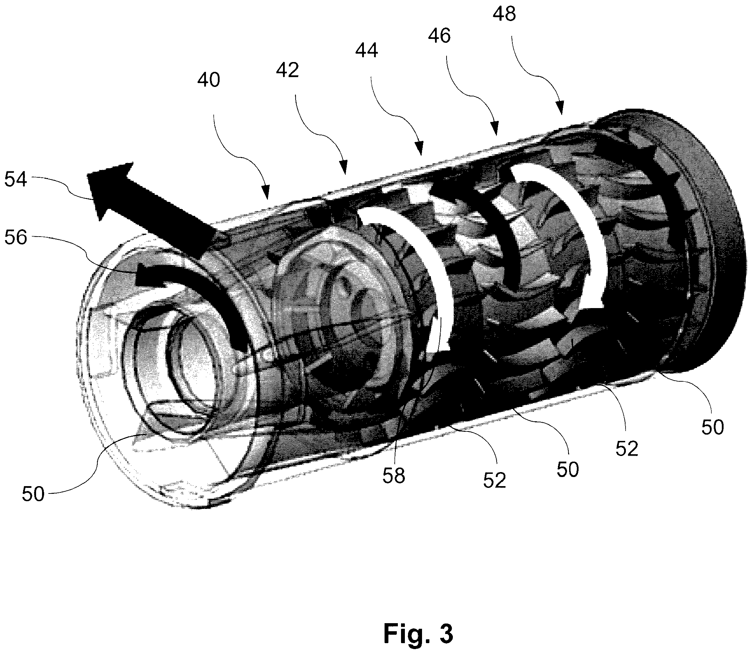

Fig. 3 shows a perspective view of parts of the braking device 16, wherein the rotating element 30 is presently illustrated transparently. The braking device 16 may comprise several wheels 40, 42, 44, 46, 48 next to the transmission 20 (here not illustrated). The wheels 40, 44 and 48 may be respectively designated as guide wheel. The guide wheels 40, 44, 48 may be arranged in a rotating element 30 such that each guide wheel 40, 44, 48 rotates upon rotation of the rotating element 30, meaning they do not comprise a relative speed to the rotating element 30 even when the rotating element 30 rotates. The guide wheels 40, 44, 48 may be connected to the rotating element 30, for example by means of a connection that is form- and/or material- and/or force-fitting.

Each guide wheel 40, 44 and 48 may further comprise a plurality of guide blades 50.

The wheels 42, 46 may be respectively designated as impeller wheel. The impeller wheels 42, 46 may be arranged in the rotating element 30 such that each impeller wheel 42, 46 may be rotatable opposing a rotating direction of the rotating element 30. Each impeller wheel 42, 46 may comprise a plurality of impeller wheels 52.

The wheels 40, 42, 44, 46 and 48 may be arranged such that they all rotate around the same rotating axis. This rotating axis may be the same as the cylinder axis and/or the rotating axis of the roller shell 12. The wheels 40, 42, 44, 46 and 48 may all comprise around the same radial expansion.

The arrow 54 points in conveyor direction of a pallet (not shown) while being conveyed through a roller conveyor (not shown), comprising the conveyor roller 10 with introduced braking device 16.

When travelling through the roller shell 12 of the conveyor roller 10 and thereby the rotating element 30 is rotated in the direction of the arrow 54 by means of the pallet. The arrows 56 show the rotation of the guide wheels 40, 44, 48 rotating in the driven state with the rotating element 30.

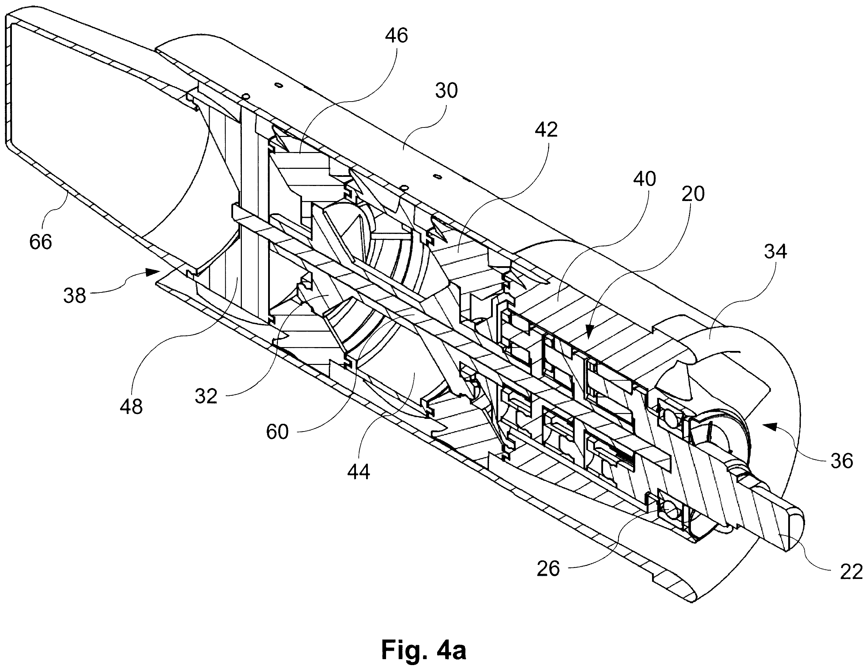

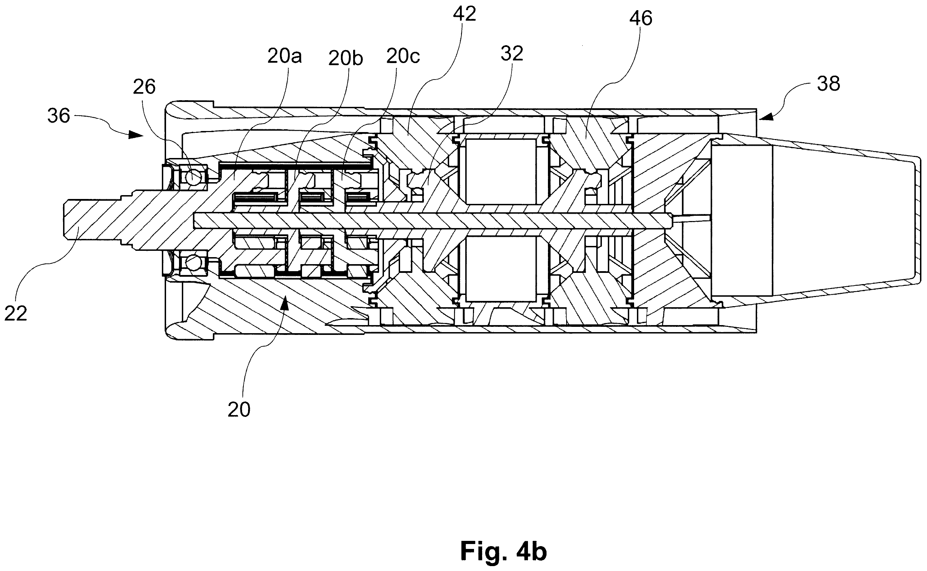

The transmission 20 (not shown in Fig. 3) drives with the rotation of the rotating element 30 the shaft element 32 (cf. Figs. 4a and 4b). By means of the shaft element 32 the impeller wheels 42, 46 are ultimately rotated in the direction of the arrows 58. The rotating directions 56 and 58 run in opposite directions around the same rotating axis.

Figs. 4a and 4b respectively show a sectional view of the braking device 16. It may be recognized in these Figures in detail how the individual stages 20a, 20b, 20c of the three-stage planetary transmission 20 are couplable to each other. The first transmission stage 20a, particularly the carrier of the first transmission stage, may, as described above, comprise the mounting structure 22. Further, a stationary shaft 60 may be mounted at the transmission stage 20a. In particular, the stationary shaft 60 may be connected to the mounting structure 22. On the shaft 60, both, the sun of the transmission stages 20b and 20c and via the shaft element 32 the impeller wheels 42, 46, may be rotatably disposed. The shaft 60 may be further mounted at the guide wheel 48 and namely such that the driven guide wheel 48 may rotate with one movement of the rotating element 30 around the shaft 60.

The third transmission stage 20c may be coupled to the shaft element 32. The shaft element 32 may be coupled to the impeller wheels 42, 46. Upon rotation of the rotating element 30 the first transmission stage 20a and thus the transmission stages 20b and 20c may be driven. The shaft element 32 may be coupled to the impeller wheels 42 and 46 such that the rotation of the rotating element 30 transmitted by the transmission 20 onto the shaft element 32 drives the impeller wheels 42 and 46.

Due to this three-stage transmission of the rotation of the rotating element 30, by way of example, it is possible to achieve based on a rotating speed of 90 revolutions per minute (Rpm) at the shaft element 32 and therefore at the impeller wheels 42 and 46 a rotating speed exceeding 7200 revolutions per minute (Rpm). Thus, a high air compressing work is performable, wherein the braking device 16 is able to achieve a high braking effect.

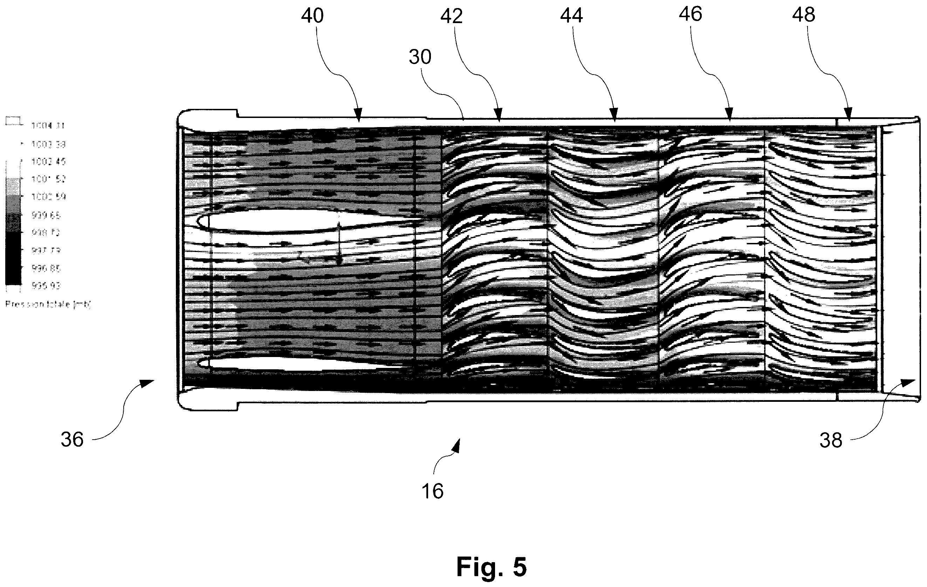

**Fig. 5** shows a flow pattern of an air mass current flowing through the braking device 16. The current path of the air current may run in particular from the inlet side 36 to the outlet side. By means of the shown shading of the air mass current along the current path through the braking device 16 it can be seen that the air mass current is increasingly compressed from stage to stage at the inlet side 36 to the outlet side 38. A light area, as for example at the outlet side 38, depicts an area with high air pressure and/or high compression (see table on the left of the sectional view), whereas a dark area, as for example at the inlet side 36, depicts an area with low air pressure, especially an area of regular atmospheric pressure.

The highest amount of air compression work may be performed at the impeller wheels 42 and 44. There, the air mass current is accelerated the most and compressed, especially radially outside at the head portion of the rotor blades 52.

The prevailing angular momentum there equals the product of the mass current m, the speed v and the radius r.

$$D = m * v * r;$$

wherein applies:

D = angular momentum; m = mass current; v = speed; r = radius

The change in the angular momentum within a sub-system (rotor blades) generates an angular momentum M around the center of the turbine (presently braking device):

$$M = \Delta D/\Delta t = \Delta c/\Delta t * r * m$$

Therein, according to the lever law, only parts of the current speed c that are perpendicular to the turbine center of rotation of the fluid may provide a part for the angular moment. The performance results from work per time.

$$P = M * \omega$$

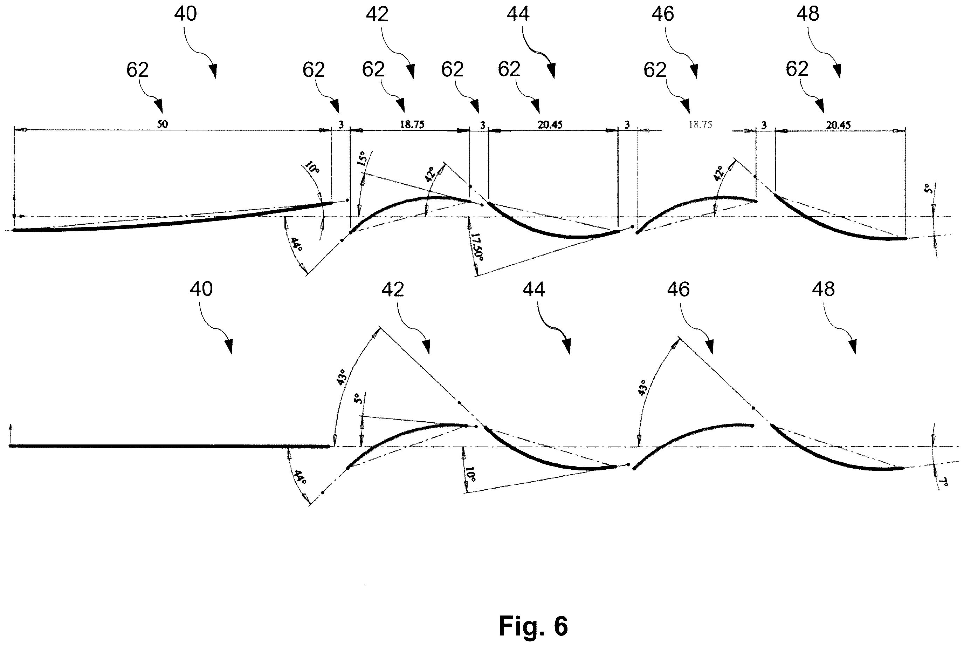

**Fig. 6** show a section through a row of the blade arrangement of the braking device 16, comprising the guide and impeller wheels 40 through 48. The top of the two sectional views shows the base portion of the blade arrangement, the lower sectional view shows the head portion of the blade arrangement. The two indications of the respective length 62 by way of example are made in mm. Between the individual wheels 40 through 48 there may be a play (presently approximately 3 mm). The different angle specifications at the rotors indicate how the profile of the blade arrangement of the base portion (arranged radially inside) to the head portion (arranged radially outside) is changed. By means of the profile change of the blade arrangement an efficient acceleration of the air mass current is achievable and thus an efficient air compression work performable.

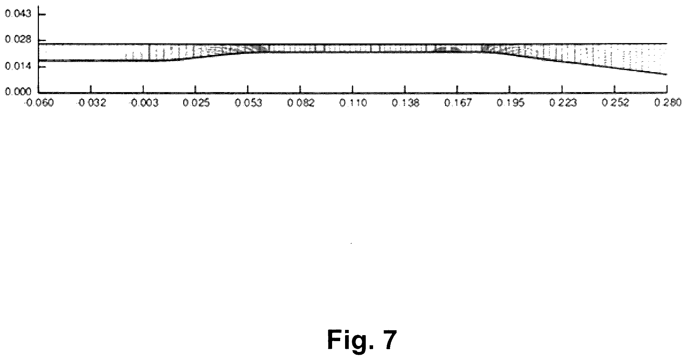

**Fig. 7** shows an axial cross-sectional view of the current path in the braking direction in a schematic representation. The cross section at the inlet side 36 and/or at the guide wheel 40 enable sucking in a great air mass current. Finally, the cross section is rejuvenated towards the impeller wheel 42, wherein the current speed of the air mass current is increased. From thereon the current path in the cross section is substantially constant until approximately after the impeller wheel 48. At the impeller wheels 42 and 46 the air mass current is compressed. The guide wheels 40, 44 and 48 may direct the air mass current. After the guide wheel 48 and/or at the outlet side 38 the air current flows from the braking device 16 and the cross section is continuously extended. The number specifications of the coordinate system are made in meters.

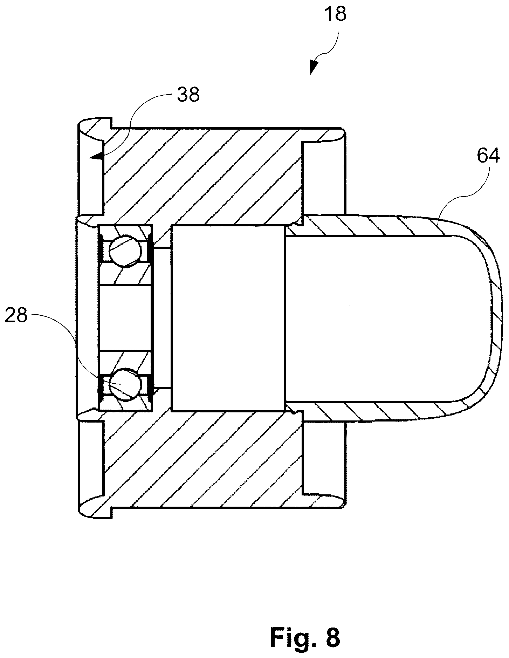

**Fig. 8** shows the end roller cap 18, which can be introduced in the roller shell 12 of the conveyor roller 10. The end roller cap 18 may comprise a pressure optimizing device 64 with a convex form facing into the inside of the roller shell 12. The pressure optimizing device 64 may be designed in particular to reduce pressure loss at the entrance of the end roller cap 18.

The end roller cap 18 may comprise a bearing 28, by means of which the front side 14 of the conveyor roller 10 at the rack 24 opposite the braking device 16 may be arranged by means of a pin and/or a shaft and/or another suitable component. The end roller cap 18 may form the roller floor or may be connectable with the roller floor.

The end roller cap 18 may comprise a cap and/or pressure optimizing device and/or a discharge cone 64 which extends into the inside of the conveyor roller 10. The discharge cone 64 may, due to its position in the conveyor roller 10 and its conical shape, effectively reduce pressure loss at the entrance of the end roller cap 18.

The braking device 16 may also comprise a cap and/or outlet cone and/or pressure optimizing device 66 in order to reduce pressure loss at the exhaust of the braking device 16.

**List of Reference Numerals**

| | |
|---|---|
| 10 | Conveyor roller |
| 12 | Roller shell |
| 14 | Front side |
| 16 | Braking device |
| 18 | End roller cap |
| 20 | Transmission |
| 20a | Transmission stage 1 |
| 20b | Transmission stage 2 |
| 20c | Transmission stage 3 |
| 22 | Mounting structure |
| 24 | Rack |
| 26 | Bearing |
| 28 | Bearing |
| 30 | Rotating element |
| 32 | Shaft element |
| 34 | Stop ring |
| 36 | Inlet side |
| 38 | Outlet side |
| 40 | Guide wheel |
| 42 | Impeller wheel |
| 44 | Guide wheel |
| 46 | Impeller wheel |
| 48 | Guide wheel |
| 50 | Guide blades |
| 52 | Rotor blades |
| 54 | Conveyor direction pallet |
| 56 | Rotating direction guide wheel |
| 58 | Rotating direction impeller wheel |
| 60 | Shaft |
| 62 | Length |
| 64 | Pressure optimizing device |
| 66 | Pressure optimizing device |

**Claims**

1.  Braking device (16) for a conveyor roller (10), comprising:

    a rotating element (30) that is couplable to the conveyor roller (10) such that upon rotation of the conveyor roller (10) the rotating element (30) rotates with the conveyor roller (10),
    a transmission (20) driving a shaft element (32) by a rotation of the rotating element (30), and **characterized by**
    at least one impeller wheel (42, 46) coupled to the shaft element (32), wherein the impeller wheel (42, 46) comprises a plurality of rotor blades (52),
    wherein the impeller wheel (42, 46) in a driven state performs air compression work with the rotor blades (52) and thereby provides a braking effect.

2.  Braking device (16) according to claim 1, wherein the transmission (20) is adapted such that the shaft element (32) and thereby the impeller wheel (42, 46) are driven at at least eight times the rotating speed of a roller shell (12) of the conveyor roller (10).

3.  Braking device (16) according to one of the preceding claims, wherein the impeller wheel (42, 46) is configured such that it sucks in air through an air inlet of the braking device (16) during operation which it compresses by means of its rotor blades (52).

4.  Braking device (16) according to one of the preceding claims, wherein the braking device (16) comprises a plurality of guide blades (50) that are adapted to direct an air current onto the plurality of rotor blades (52).

5.  Braking device (16) according to claim 4, wherein the guide blades (50) are arranged at at least one guide wheel (40, 44, 48) arranged adjacent to the at least one impeller wheel in the braking device (16).

6.  Braking device (16) according to claim 5, wherein in air current direction in front of each impeller wheel (42, 46) and after each impeller wheel (42, 46) of the braking device a guide wheel (40, 44, 48) with respectively a plurality of guide blades (50) is arranged.

7.  Braking device (16) according to one of claims 5 or 6, wherein each guide wheel (40, 44, 48) is either arranged statically fixed inside the conveyor roller (10) or such that it rotates with the rotating element (30) and thus with the conveyor roller (10).

8.  Braking device (16) according to one of claims 4 through 7, wherein each guide blade (50) comprises a head portion and a base portion and is connected to the rotating element (30) at the head portion arranged radially outside.

9.  Braking device (16) according to one of the preceding claims, wherein each rotor blade (52) comprises a head portion and a base portion and is arranged at the base portion that is arranged radially inside at an axis element of the impeller wheel (42, 46).

10. Braking device (16) according to one of the preceding claims, wherein the rotating element (30) is coupled to the transmission (20).

11. Braking device (16) according to one of the previous claims, wherein the rotating element (30) is provided as a housing of the braking device (16) which is attachable in a roller shell of the conveyor roller (10).

12. Braking device (16) according to one of the preceding claims, wherein the transmission (20) comprises at least one planetary transmission.

13. Braking device (16) according to one of the preceding claims, wherein the braking device (16) comprises two impeller wheels (42, 46) and three guide wheels (40, 44, 48) which are arranged alternatingly in succession in air current direction.

14. Conveyor roller (10) for a roller conveyor comprising a braking device (16) in accordance with any one of the preceding claims,
wherein the braking device (16) is arranged inside a roller shell (12) of the conveyor roller (10).

15. Method for braking a conveyor roller (10) with the steps of:

   introducing a braking device (16) according to any of claims 1 through 13 in a conveyor roller (10);
   coupling the rotating element (30) of the braking device (16) to the conveyor roller (10);
   rotating the rotating element (30) by means of a rotation of the conveyor roller (10);
   transmitting the rotation of the rotating element (30) to the shaft element (32) of the braking device (16) by means of the transmission of the braking device (16);
   driving the impeller wheel (42, 46) of the braking device (16) by means of the shaft element (32); and
   performing air compression work by the rotor blades (52) of the impeller wheel (42, 46) to brake the conveyor roller (10).

**Patentansprüche**

1. Bremsvorrichtung (16) für eine Förderrolle (10), umfassend:

   ein Drehelement (30), das mit der Förderrolle (10) koppelbar ist, sodass bei Drehung der Förderrolle (10) das Drehelement (30) mit der Förderrolle (10) rotiert,
   ein Getriebe (20), das ein Wellenelement (32) durch eine Drehung des Drehelements (30) antreibt, und **gekennzeichnet durch**
   mindestens ein Flügelrad (42, 46), das mit dem Wellenelement (32) gekoppelt ist, wobei das Flügelrad (42, 46) eine Vielzahl von Rotorblättern (52) umfasst,
   wobei das Flügelrad (42, 46) in einem angetriebenen Zustand Luftkompressionsarbeit mit den Rotorblättern (52) ausführt und dadurch eine Bremswirkung liefert.

2. Bremsvorrichtung (16) gemäß Anspruch 1, wobei das Getriebe (20) dazu ausgelegt ist, das Wellenelement (32) und dadurch das Flügelrad (42, 46) mit mindestens der achtfachen Drehzahl eines Rollenmantels (12) der Förderrolle (10) angetrieben wird.

3. Bremsvorrichtung (16) gemäß einem der vorhergehenden Ansprüche, wobei das Flügelrad (42, 46) dazu ausgelegt ist, im Betrieb durch einen Lufteinlass der Bremsvorrichtung (16) Luft anzusaugen, die es mittels seiner Rotorblätter (52) komprimiert.

4. Bremsvorrichtung (16) gemäß einem der vorhergehenden Ansprüche, wobei die Bremsvorrichtung (16) eine Vielzahl von Leitschaufeln (50) umfasst, die dazu ausgelegt sind, einen Luftstrom auf die Vielzahl von Rotorschaufeln (52) zu richten.

5. Bremsvorrichtung (16) gemäß Anspruch 4, wobei die Leitschaufeln (50) an mindestens einem Leitrad (40, 44, 48) angeordnet sind, das angrenzend an dem mindestens einen Flügelrad in der Bremsvorrichtung (16) angeordnet ist.

6. Bremsvorrichtung (16) gemäß Anspruch 5, wobei in Luftstromrichtung vor jedem Flügelrad (42, 46) und nach jedem Flügelrad (42, 46) der Bremsvorrichtung ein Leitrad (40, 44, 48) mit jeweils einer Vielzahl von Leitschaufeln (50) angeordnet ist.

7. Bremsvorrichtung (16) gemäß einem der Ansprüche 5 oder 6, wobei jedes Leitrad (40, 44, 48) entweder statisch fest innerhalb der Förderrolle (10) oder so angeordnet ist, dass es sich mit dem Drehelement (30) und damit mit der Förderrolle (10) dreht.

8. Bremsvorrichtung (16) gemäß einem der Ansprüche 4 bis 7, wobei jede Leitschaufel (50) einen Kopfabschnitt und einen Basisabschnitt aufweist und an dem radial außen angeordneten Kopfabschnitt mit dem Drehelement (30) verbunden ist.

9. Bremsvorrichtung (16) gemäß einem der vorhergehenden Ansprüche, wobei jede Rotorschaufel (52) einen Kopfabschnitt und einen Basisabschnitt umfasst und am dem Basisabschnitt angeordnet ist, der radial innen an einem Achselement des Flügelrades (42, 46) angeordnet ist.

10. Bremsvorrichtung (16) gemäß einem der vorhergehenden Ansprüche, wobei das Drehelement (30) mit dem Getriebe (20) gekoppelt ist.

11. Bremsvorrichtung (16) gemäß einem der vorhergehenden Ansprüche, wobei das Drehelement (30) als Gehäuse der Bremsvorrichtung (16) vorgesehen ist, das in einem Rollenmantel der Förderrolle (10) befestigbar ist.

**12.** Bremsvorrichtung (16) gemäß einem der vorhergehenden Ansprüche, wobei das Getriebe (20) mindestens ein Planetengetriebe umfasst.

**13.** Bremsvorrichtung (16) gemäß einem der vorhergehenden Ansprüche, wobei die Bremsvorrichtung (16) zwei Flügelräder (42, 46) und drei Leiträder (40, 44, 48) aufweist, die in Luftstromrichtung abwechselnd hintereinander angeordnet sind.

**14.** Förderrolle (10) für einen Rollenförderer, umfassend eine Bremsvorrichtung (16) gemäß einem der vorhergehenden Ansprüche,
wobei die Bremsvorrichtung (16) innerhalb eines Rollenmantels (12) der Förderrolle (10) angeordnet ist.

**15.** Verfahren zum Abbremsen einer Förderrolle (10) mit den Schritten:

Einbringen einer Bremsvorrichtung (16) gemäß einem der Ansprüche 1 bis 13 in eine Förderrolle (10);
Koppeln des Drehelements (30) der Bremsvorrichtung (16) mit der Förderrolle (10);
Drehen des Drehelements (30) durch eine Drehung der Förderrolle (10);
Übertragen der Drehung des Drehelements (30) auf das Wellenelement (32) der Bremsvorrichtung (16) mittels des Getriebes der Bremsvorrichtung (16);
Antreiben des Flügelrads (42, 46) der Bremsvorrichtung (16) mittels des Wellenelements (32); und
Ausführen von Luftkompressionsarbeit durch die Rotorblätter (52) des Flügelrads (42, 46) zum Abbremsen der Förderrolle (10).

**Revendications**

**1.** Dispositif de freinage (16) pour un rouleau de transporteur (10), comprenant :

un élément rotatif (30) qui peut être accouplé avec le rouleau de transporteur (10) de telle sorte que, lors de la rotation du rouleau de transporteur (10), l'élément rotatif (30) tourne avec le rouleau de transporteur (10),
une transmission (20) entraînant un élément formant arbre (32) par le biais d'une rotation de l'élément rotatif (30), et **caractérisé par**
au moins une roue formant impulseur (42, 46) accouplée avec l'élément formant arbre (32), la roue formant impulseur (42, 46) comprenant une pluralité d'aubes de rotor (52),
la roue formant impulseur (42, 46) effectuant, dans un état entraîné, un travail de compression d'air avec les aubes de rotor (52) et produisant ainsi un effet de freinage.

**2.** Dispositif de freinage (16) selon la revendication 1, dans lequel la transmission (20) est prévue de telle sorte que l'élément formant arbre (32) et par conséquent la roue formant impulseur (42, 46) soient entraînés à au moins huit fois la vitesse de rotation d'une enveloppe de rouleau (12) du rouleau de transporteur (10).

**3.** Dispositif de freinage (16) selon l'une des revendications précédentes, dans lequel la roue formant impulseur (42, 46) est conçue de telle sorte que, pendant le fonctionnement, elle aspire à travers une entrée d'air du dispositif de freinage (16) de l'air qu'elle comprime au moyen de ses aubes de rotor (52).

**4.** Dispositif de freinage (16) selon l'une des revendications précédentes, le dispositif de freinage (16) comprenant une pluralité d'aubes de guidage (50) qui sont prévues pour diriger un courant d'air sur la pluralité d'aubes de rotor (52).

**5.** Dispositif de freinage (16) selon la revendication 4, dans lequel les aubes de guidage (50) sont placées au niveau d'au moins une roue de guidage (40, 44, 48) placée de manière adjacente à l'au moins une roue formant impulseur dans le dispositif de freinage (16).

**6.** Dispositif de freinage (16) selon la revendication 5, dans lequel, dans la direction du courant d'air, une roue de guidage (40, 44, 48) comportant respectivement une pluralité d'aubes de guidage (50) est placée devant chaque roue formant impulseur (42, 46) et après chaque roue formant impulseur (42, 46) du dispositif de freinage.

**7.** Dispositif de freinage (16) selon l'une des revendications 5 et 6, dans lequel chaque roue de guidage (40, 44, 48) est placée soit de façon à être fixée statiquement à l'intérieur du rouleau de transporteur (10), soit de telle sorte qu'elle tourne avec l'élément rotatif (30) et donc avec le rouleau de transporteur (10).

**8.** Dispositif de freinage (16) selon l'une des revendications 4 à 7, dans lequel chaque aube de guidage (50) comprend une partie tête et une partie base et est raccordée à l'élément rotatif (30) au niveau de la partie tête placée radialement à l'extérieur.

**9.** Dispositif de freinage (16) selon l'une des revendications précédentes, dans lequel chaque aube de rotor (52) comprend une partie tête et une partie base et est placée au niveau de la partie base qui est placée radialement à l'intérieur au niveau d'un élément axial de la roue formant impulseur (42, 46).

10. Dispositif de freinage (16) selon l'une des revendications précédentes, dans lequel l'élément rotatif (30) est accouplé avec la transmission (20).

11. Dispositif de freinage (16) selon l'une des revendications précédentes, dans lequel l'élément rotatif (30) est réalisé sous la forme d'un logement du dispositif de freinage (16) qui peut être attaché dans une enveloppe de rouleau du rouleau de transporteur (10).

12. Dispositif de freinage (16) selon l'une des revendications précédentes, dans lequel la transmission (20) comprend au moins une transmission à engrenages planétaires.

13. Dispositif de freinage (16) selon l'une des revendications précédentes, le dispositif de freinage (16) comprenant deux roues formant impulseurs (42, 46) et trois roues de guidage (40, 44, 48) qui sont placées de manière alternée successivement dans la direction du courant d'air.

14. Rouleau de transporteur (10) pour un transporteur à rouleaux comprenant un dispositif de freinage (16) selon l'une quelconque des revendications précédentes,
dans lequel le dispositif de freinage (16) est placé à l'intérieur d'une enveloppe de rouleau (12) du rouleau de transporteur (10).

15. Procédé de freinage d'un rouleau de transporteur (10) comportant les étapes consistant à :

> introduire un dispositif de freinage (16) selon l'une quelconque des revendications 1 à 13 dans un rouleau de transporteur (10) ;
> accoupler l'élément rotatif (30) du dispositif de freinage (16) avec le rouleau de transporteur (10) ;
> mettre l'élément rotatif (30) en rotation au moyen d'une rotation du rouleau de transporteur (10) ;
> transmettre la rotation de l'élément rotatif (30) à l'élément formant arbre (32) du dispositif de freinage (16) au moyen de la transmission du dispositif de freinage (16) ;
> entraîner la roue formant impulseur (42, 46) du dispositif de freinage (16) au moyen de l'élément formant arbre (32) ; et
> effectuer un travail de compression d'air par le biais des aubes de rotor (52) de la roue formant impulseur (42, 46) pour freiner le rouleau de transporteur (10).

**Fig. 1**

**Fig. 2**

EP 3 670 398 B1

Fig. 3

Fig. 4a

Fig. 4b

Fig. 5

Fig. 6

**Fig. 7**

**Fig. 8**

EP 3 670 398 B1

**EP 3 670 398 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1243528 A1
- EP 2419353 B1
- DE 20212979 U1